# EUROPEAN PATENT SPECIFICATION

(11) **EP 1 582 044 B1**
(45) Date of publication and mention of the grant of the patent: **22.07.2009**
(21) Application number: 03775739.0
(22) Date of filing: 05.12.2003
(51) Int. Cl.: H04L 29/06, G06F 1/00

(54) **Content access control from an information carrier player**
Inhaltszugriffskontrolle von einem Informationsträgerspieler
Restriction de 'acces à un contenu à partir d'un lecteur de support d'information

(30) Priority: 30.12.2002 EP 02293266
(43) Date of publication of application: 05.10.2005
(73) Proprietor: Koninklijke Philips Electronics N.V., 5621 BA Eindhoven (NL)
(72) Inventor: KELLY, Declan Patrick, Société Civile SPID, F-75008 Paris (FR); PENG, Yang, Société Civile SPID, F-75008 Paris (FR)
(74) Representative: van Oudheusden-Perset, Laure E.
(86) International application number: PCT/IB2003/005827
(87) International publication number: WO 2004/059942

(56) References cited:
- WO-A-00/67096
- DE-A- 10 024 234
- US-A- 5 706 507
- PLANETWEB: "Planetweb's Parental control Solution" , PLANETWEB , INTERNET XP002274173 the whole document

## Description

### FIELD OF THE INVENTION

The invention relates to a method of controlling a user access to a server content from an information carrier player comprising a parental control access.

The invention applies to information carrier players implementing a parental control level feature, such as DVD players.

### BACKGROUND OF THE INVENTION

The DVD Forum has established a working group AH1-12 to standardize Web connected DVD, known as WebDVD. These new specifications are an extension of current DVD-Video specifications. They describe that DVD-Video discs compliant with these new specifications will be published with links to specific Websites containing additional content directly related to the content of the DVD disc being played. These specific Websites may include new navigation menus and content, which the player can download and use instead of original menus provided by the DVD disc.

Players supporting WebDVD comprise communication means for connecting to Web servers which contain said additional content. Advantageously, such communication means can also be used to access any other general Websites for general Web browsing.

In parallel, DVD players nowadays include a parental control feature. The purpose of this feature is to disable the playing of DVD discs that are deemed unsuitable for children. To this end, some DVDs are encoded with a specific parental control level. If the parental control level of the disc is higher than the parental control level of the DVD player (set by parents in using a PIN code), the player will not play the disc. This feature allows parents to limit the type of DVD content that can be played on the player.

In DVD players implementing such a parental control level feature, this feature is limitative and no longer relevant since it cannot restrict or control the access to general Websites deemed unsuitable for children.

Document DE 10024234 describes parental control when accessing a server via a network like internet. In the proposed devices and methods, for example a browser, a parameter from a user profile is used to limit access to specific information on the internet.

Document "PLANETWEB: "Planetweb's Parental control Solution" PLANETWEB, INTERNET, XP002274173" describes parental control when accessing a server via a network like internet, allowing parents the option to set filters in 15 different areas of concern.

Document US 5,706,507 describes parental control when accessing a server via a network like internet, using an advisory server.

### OBJECT AND SUMMARY OF THE INVENTION

It is an object of the invention to propose a method of controlling a user access to a server content from an information carrier player comprising a parental control access.

According to the invention the object is achieved with a method as defined in claim 1, and a device as claimed in claim 3.

The method of controlling according to the invention takes either advantage of the existing parental control access used in information carrier players, and the fact that the data stored on some servers which the user try to access are associated with a rating level similar to a parental control level.

The setting of the parental control level in the player is not only used for controlling the access to the information carrier content (and to the Web servers linked to this information carrier), but also for controlling the access of Websites in the case of general Web browsing.

The method comprises a look-up table step for establishing a correspondence between the rating level classification of said data on the server and the parental control level classification of said information carrier player.

This characteristic allows the player to be adaptable to any labelling system which associates a rating level with data.

The invention also relates to an information carrier player comprising processing means for controlling a user access to a server content, said information carrier player comprising parental control access means based on a current parental control level, said server content comprising data associated with a rating level, said information carrier player also comprising control means based on a comparison between said current parental control level and the rating level of said data for selecting authorized data to be displayed on said information carrier player.

The information carrier player comprises a look-up table for establishing a correspondence between the rating level classification of said data on the server and the parental control level classification of said information carrier player.

According to an additional characteristic, the information carrier player comprises look-up means for establishing a correspondence between the rating level classification of said data and the parental control level classification of said information carrier player.

The invention also relates to a computer program comprising code instructions for implementing the steps of the method according to the invention.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner :

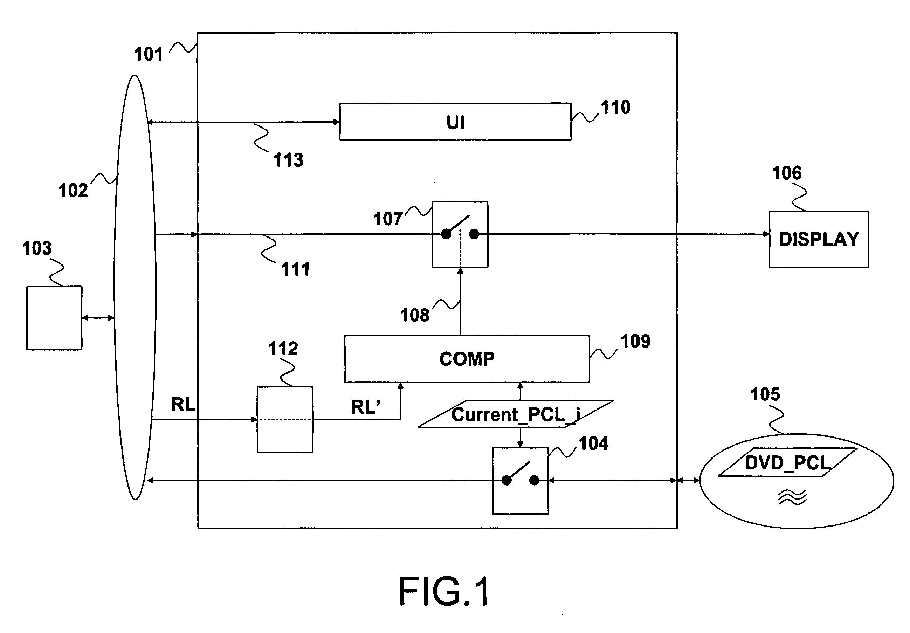

Fig.1 depicts the method according to the invention of controlling a user access to a server content.

### DETAILED DESCRIPTION OF THE INVENTION

Fig.1 depicts a first method according to the invention of controlling a user access to a server content. This Figure shows an information carrier player 101 communicating via a network 102 with a server 103. For example, it shows a DVD player 101 communicating via the Internet network 102 with a distant Website 103.

The player 101 comprises a parental control access step 104 based on the Motion Picture Association of America (MPAA) rating system.

The following Table 1 lists the individual parental control levels (PCL) the player can be set to. The highest PCL = 8 relates to adult contents, while the lowest PCL = 1 relates to kid safe contents.

**Table 1 : MPAA Rating**

| **MPAA Rating** | **Parental control level (PCL)** | **General Description** |
|---|---|---|
| | 8 | Unrated (most restricted audience) |
| | | |
| NC-17 | 7 | NC-17 Adult theme or content, not suitable for children under 17 |
| | | |
| R | 6 | Restricted (mature audience) |
| | | |
| | 5 | Mature teenage audience |
| | | |
| PG-13 | 4 | Parental guidance suggested, unsuitable for children under 13 (teenage audience) |
| | | |
| PG | 3 | Parental guidance suggested (mature young audience) |
| | | |
| | 2 | Most audiences |
| | | |
| G | 1 | Suitable for general audiences (general, unrestricted audience) |

This parental control access step is used for controlling the access to the content of an information carrier 105 (and as a consequence a control access to the specific Websites linked to this DVD). The step 104 is similar to a switch controlled by a control signal derived from a comparison between the parental control level of the disc (designated by DVD_PCL) and the current parental control level (designated by Current_PCL_i) set in the player 101. A user can access the disc content (and also to the specific Websites linked to this DVD) only if Current_PCL_i is higher than or equal to DVD_PCL. The index i corresponds to one of the MPPA rating values as defined in Table 1.

The player 101 is associated with a display 106 in charge of displaying the content of the accessed server, but also the content of the DVD disc 105 and the data of a specific server linked to this disc.

The invention takes advantage of the fact that data stored on some servers which the user may try to access are associated with a rating level (referred to as RL in the following), such a rating level being similar to a parental control level.

For example, the Internet Content Rating Association and the Recreational Software Advisory Council on the Internet propose labelling systems for owners of Websites to subdivide their data into main categories :
- Chat,
- The language used on the site,
- The nudity and sexual content of a site,
- The violence depicted on the site,
- Others categories such as gambling, drugs and alcohol.
Each category may comprise sub-categories for better identification the data content.

Such a labelling of data is intended to be used in Web browsers in personal computers. The parameter settings of the Web browsers are set so as to allow only categories or sub-categories. If the Website accessed by the user comprises data having a label excluded from these settings, the respective data content cannot be displayed in the browser.

Usually, such labels are HTML-coded as meta tags in Web pages carrying data, either for a specific Web page, a specific folder of data, or for the whole content of the Website.

The method according to the invention comprises a control step 107 for selecting authorized data to be displayed on the display 106. This control step 107 is similar to a switch controlled by a control signal 108 which is generated by a comparison step 109. The comparison step 109 performs a comparison between the current parental control level Current_PCL_i and the rating level RL of the data situated on the server and accessed by a user. For accessing a server, or a specific data on a server, the user may use the user interface 110, such as a keyboard where he enters the Website or Web page address.

When the user tries to access a data content situated on a server 103, a request 113 to said server is generated by the player 101. In response, the sever 103 sends the rating level RL of said data to the player.

If the value of RL is such that, considering the current parental control level Current_PCL_i, data 111 are deemed unsuitable for children, the comparison step 109 generates a control signal 108 having a first state which opens the switch 107. As a consequence, the display of the data 111 is not possible.

If the value of RL is such that, considering the current parental control level Current_PCL_i, data 111 are not deemed unsuitable for children, the comparison step 109 generates a control signal 108 having a second state which closes the switch 107. As a consequence, the display of the data 111 is possible.

The comparison between the current parental control level Current_PCL_i and the rating level RL of the data may not always be directly possible, for example if the number of categories of rating levels is not identical to the number of categories of the MPAA Rating. Thus, the method according to the invention advantageously comprises a look-up table step 112 for establishing a correspondence between the rating level classification of the data situated on the server and the MPAA Rating as shown in Table 1. The look-up table 112 establishes a correspondence between an input rating level RL and an output rating level RL'.

For example, it may be decided to associate categories (nudity and sexual content of a site, violence depicted on the site) with a MPPA rating having a value RL' equal to 8, to associate categories (Chat, language used on the site) with a MPPA rating having a value RL' equal to 7, and to associate categories (Others such as gambling, drugs and alcohol) with a MPPA rating having a value RL' equal to 6. In that case, the comparison step 109 generates a control signal 108 having said first state if Current_PCL_i is lower than the associated MPPA rating of the data, and generates a control signal 108 having said second state if Current_PCL_i is higher than or equal to the associated MPPA rating of the data.

Obviously, alternative classifications may be made in considering the sub-categories of said categories for refining the filtering of data that the user is allowed to look at.

The method of controlling according to the invention may take place in an information carrier player, such as a DVD player, or in any portable apparatus comprising a DVD player (PDA, mobile phone ...).

Such a method may be implemented by means of hardware elements (such as wired electronic circuits, memories, signal processors ...), or alternatively by means of software elements such as computer programs comprising code instructions stored in a memory device, said code instructions being executed by a signal processor.

The words "comprise", "comprises" and "comprising" do not exclude the presence of elements other than those listed in the claims.

## Claims

1. A method of controlling a user access to to a server (103), said server (103) being intended to contain data associated with a rating level (RL), said method of controlling comprising :
- a first switching step (104) for controlling, from an information carrier player (101), a user access to an information carrier (105), said information carrier (105) being associated with a preset parental control level (DVD_PCL), said information carrier player (101) being associated with a current parental control level (Current_PCL_i), the switching step being controlled by a carrier access control signal derived from a first comparison between said current parental control level (Current_PCL_i) and said preset parental control level (DVD_PCL), for authorizing the access to said information carrier (105),
- a second switching step (107) for controlling, from the information carrier player (101), a user access to said server by a server access control signal (108) derived from a second comparison between a selected parental control level and said rating level (RL), for authorizing the access to said data on said server,
**characterized in that**
- the second switching step (107) is arranged for applying, for said second comparison (109), the current parental control level (Current_PCL_i) as the selected parental control level, and
the method comprises a look-up table step (112) for establishing a correspondence between the rating level (RL) of said data on the server and the current parental control level (Current_PCL_i) of said information carrier player, said correspondence intended to be used for said second comparison.

2. A method as claimed in claim 1, wherein the look-up table step (112) comprises a preliminary look-up table step for generating, from said rating level (RL), a modified rating level (RL') intended to be used for said second comparison.

3. An information carrier player (101) intended to read an information carrier (105), said information carrier being associated with a preset parental control level (DVD_PCL), and said information carrier player (101) being associated with a current parental control level (Current_PCL_i), and comprising:
- first switching means (104) controlling a user access to said information carrier, said first switching means controlled by a carrier access control signal derived from a first comparison between said current parental control level (Current_PCL_i) and said preset parental control level (DVD_PCL), for authorizing the reading of said information carrier (105),
- second switching means (107), controlling the user access to a server (103) containing data associated with a rating level (RL), said second switching means controlled by a server control signal (108) derived from a second comparison between a selected parental control level and said rating level (RL), for authorizing the access to said data on said server,
**characterized in that**
- the second switching means (107) applying, for said second comparison (109), the current parental control level (Current_PCL_i) as the selected parental control level, and
the device comprises look-up table means (112) for establishing a correspondence between the rating level (RL) of said data on said server and the current parental control level (Current_PCL_i) of said information carrier player, said correspondence intended to be used for said second comparison.

4. A device (101) as claimed in claim 3, wherein the look-up table means (112) are arranged for generating, from said rating level (RL), a modified rating level (RL') intended to be used for said second comparison.

5. A computer program comprising code instructions for implementing the steps of the method as claimed in claim 1 or 2.

## Patentansprüche

1. Verfahren zur Kontrolle eines Benutzerzugriffs auf einen Server (103), wobei der genannte Server (103) Daten enthalten soll, die mit einem Beurteilungspegel (RL) assoziiert sind, wobei das genannte Kontrollverfahren die nachfolgenden Verfahrensschritte umfasst:
- einen ersten Schaltschritt (104) zur Kontrolle, von einem Informationsträgerspieler (101) aus, eines Benutzerzugriffs auf einen Informationsträger (105), wobei der genannte Informationsträger (105) mit einem voreingestellten elterlichen Kontrollpegel (DVD_PCL) assoziiert ist, wobei der genannte Informationsträgerspieler (101) mit einem aktuellen elterlichen Kontrollpegel (Current_PCL_i) assoziiert ist, wobei der Schaltschritt von einem Trägerzugriffssteuersignal gesteuert wird, das von einem ersten Vergleich zwischen dem genannten aktuellen elterlichen Kontrollpegel (Current_PCL_i) und dem genannten voreingestellten elterlichen Kontrollpegel (DVD_PCL) hergeleitet wird, zur Autorisierung des Zugriffs auf den genannten Informationsträger (105),
- einen zweiten Schaltschritt (107) zur Kontrolle, von dem Informationsträgerspieler (101) aus, eines Benutzerzugriffs auf den genannten Server durch ein Serverzugriffssteuersignal (108), hergeleitet von einem zweiten Vergleich zwischen einem selektierten elterlichen Kontrollpegel und dem genannten Beurteilungspegel (RL), zur Autorisierung des Zugriffs auf die genannten Daten in dem genannten Server,
**dadurch gekennzeichnet, dass**
- der zweite Schaltschritt (107) dazu vorgesehen ist, für den zweiten Vergleich (109) den aktuellen elterlichen Kontrollpegel (Current_PCL_i) als den selektierten elterlichen Kontrollpegel anzuwenden, und
- wobei das Verfahren einen Nachschlagtabellenschritt (112) umfasst, und zwar zum Bilden einer Übereinstimmung zwischen dem Beurteilungspegel (RL) der genannten Daten des Servers und dem aktuellen elterlichen Kontrollpegel (Current_PCL_i) des genannten Informationsträgerspielers, wobei die genannte Übereinstimmung für den zweiten Vergleich angewandt werden soll.

2. Verfahren nach Anspruch 1, wobei der Nachschlagtabellenschritt (112) einen einleitenden Nachschlagtabellenschritt aufweist, und zwar zum Erzeugen, von dem genannten Beurteilungspegel (RL) aus, eines modifizierten Beurteilungspegels (RL'), der für den genannten zweiten Vergleich angewandt werden soll.

3. Informationsträgerspieler (101) zum Auslesen eines Informationsträgers (105), wobei der genannte Informationsträger mit einem voreingestellten elterlichen Kontrollpegel (DVD_PCL) assoziiert ist, und wobei der genannte Informationsträgerspieler (101) mit einem aktuellen elterlichen Kontrollpegel (Current_PCL_i) assoziiert ist, und die nachfolgenden Elemente umfasst:
- erste Schaltmittel (104), die einen Benutzerzugriff auf den genannten Informationsträger steuern, wobei die genannten ersten Schaltmittel von einem Trägerzugriffssteuersignal gesteuert werden, das von einem ersten Vergleich zwischen dem genannten aktuellen elterlichen Kontrollpegel (Current_PCL_i) und dem genannten voreingestellten elterlichen Kontrollpegel (DVD_PCL) hergeleitet wird, und zwar zur Autorisierung des Auslesens des genannten Informationsträgers (105),
- zweite Schaltmittel (107), die den Benutzerzugriff auf einen Server (103) steuern, der Daten enthält, die mit einem Beurteilungspegel (RL) assoziiert sind, wobei die genannten zweiten Schaltmittel von einem Serversteuersignal (108) gesteuert werden, wobei dieses Signal von einem zweiten Vergleich zwischen einem selektierten elterlichen Kontrollpegel und dem genannten Beurteilungspegel (RL) hergeleitet wird, und zwar zur Autorisierung des Zugriffs auf die genannten Daten in dem Server,
- wobei die zweiten Schaltmittel (107) für den zweiten Vergleich (109) den aktuellen elterlichen Kontrollpegel (Current_PCL_i) als den selektierten elterlichen Kontrollpegel anwenden, und
- wobei die Anordnung Nachschlagtabellenmittel (112) aufweist zur Bildung einer Übereinstimmung zwischen dem Beurteilungspegel (RL) der genannten Daten in dem genannten Server und dem aktuellen elterlichen Kontrollpegel (Current_PCL_i) des genannten Informationsträgerspielers, wobei die Übereinstimmung für den genannten Vergleich verwendet werden soll.

4. Anordnung (101) nach Anspruch 3, wobei die Nachschlagtabellenmittel (112) dazu vorgesehen sind, aus dem genannten Beurteilungspegel (RL) einen modifizierten Beurteilungspegel (RL') zu erzeugen, der für den zweiten Vergleich verwendet werden soll.

5. Computerprogramm mit Codeinstruktionen zum Implementieren der Verfahrensschritte nach Anspruch 1 oder 2.

## Revendications

1. Procédé de contrôle d'un accès d'utilisateur à un serveur (103), ledit serveur (103) étant destiné à contenir des données associées à un niveau d'évaluation (RL), ledit procédé de contrôle comprenant :
- une première étape de commutation (104) pour contrôler, à partir d'un lecteur de support d'information (101), l'accès d'un utilisateur à un support d'information (105), ledit support d'information (105) étant associé à un niveau de contrôle parental prédéfini (DVD_PCL), ledit lecteur de support d'information (101) étant associé à un niveau de contrôle parental en cours (Current_PCL_i), l'étape de commutation étant contrôlée par un signal de contrôle d'accès de support découlant d'une première comparaison entre ledit niveau de contrôle parental en cours (Current_PCL_i) et ledit niveau de contrôle parental prédéfini (DVD_PCL), pour autoriser l'accès audit support d'information (105),
- une seconde étape de commutation (107) pour contrôler, à partir du lecteur de support d'information (101), un accès d'utilisateur audit serveur par un signal de contrôle d'accès au serveur (108) découlant d'une seconde comparaison entre un niveau de contrôle parental choisi et ledit niveau d'évaluation (RL), pour autoriser l'accès auxdites données sur ledit serveur,
**caractérisé en ce que**
- la seconde étape de commutation (107) est conçue pour appliquer, pour ladite seconde comparaison (109), le niveau de contrôle parental en cours (Current_PCL_i) en tant que niveau de contrôle parental choisi, et
le procédé comprend une étape de table de conversion (112) pour établir une correspondance entre le niveau d'évaluation (RL) desdites données sur le serveur et le niveau de contrôle parental en cours (Current_PCL_i) dudit lecteur de support d'information, ladite correspondance étant destinée à être utilisée pour ladite seconde comparaison.

2. Procédé selon la revendication 1, dans lequel l'étape de table de conversion (112) comprend une étape de table de conversion préliminaire pour générer, à partir dudit niveau d'évaluation (RL), un niveau d'évaluation modifié (RL') destiné à être utilisé pour ladite seconde comparaison.

3. Lecteur de support d'information (101) destiné à lire un support d'information (105), ledit support d'information étant associé à un niveau de contrôle parental prédéfini (DVD_PCL) et ledit lecteur de support d'information (101) étant associé à un niveau de contrôle parental en cours (Current_PCL_i), et comprenant :
- des premiers moyens de commutation (104) contrôlant l'accès d'un utilisateur audit support d'information, lesdits premiers moyens de commutation étant contrôlés par un signal de contrôle d'accès de support découlant d'une première comparaison entre ledit niveau de contrôle parental en cours (Current_PCL_i) et ledit niveau de contrôle parental prédéfini (DVD_PCL), pour autoriser la lecture dudit support d'information (105),
- des seconds moyens de commutation (107), contrôlant l'accès d'utilisateur à un serveur (103) contenant des données associées à un niveau d'évaluation (RL), lesdits seconds moyens de commutation étant contrôlés par un signal de contrôle de serveur (108) découlant d'une seconde comparaison entre un niveau de contrôle parental choisi et ledit niveau d'évaluation (RL), pour autoriser l'accès auxdites données sur ledit serveur,
**caractérisé en ce que**
- les seconds moyens de commutation (107) appliquent, pour ladite seconde comparaison (109), le niveau de contrôle parental en cours (Current_PCL_i) en tant que niveau de contrôle parental choisi, et
le dispositif comprend des moyens de table de conversion (112) pour établir une correspondance entre le niveau d'évaluation (RL) desdites données sur ledit serveur et le niveau de contrôle parental en cours (Current_PCL_i) dudit lecteur de support d'information, ladite correspondance étant destinée à être utilisée pour ladite seconde comparaison.

4. Dispositif (101) selon la revendication 3, dans lequel les moyens de table de conversion (112) sont conçus pour générer, à partir dudit niveau d'évaluation (RL), un niveau d'évaluation modifié (RL') destiné à être utilisé pour ladite seconde comparaison.

5. Programme informatique comprenant des instructions de code pour mettre en oeuvre les étapes du procédé selon la revendication 1 ou 2.
